# EUROPEAN PATENT APPLICATION

(11) **EP 3 474 047 A1**
(43) Date of publication of application: **24.04.2019**
(21) Application number: 18196119.4
(22) Date of filing: 21.09.2018
(51) Int. Cl.: G02B 5/02, G02B 27/09

(54) **LASER PROJECTION DEVICE**

(30) Priority: 19.10.2017 JP 2017202297
(71) Applicant: Panasonic Intellectual Property Management Co., Ltd., Osaka-shi, Osaka 540-6207 (JP)
(72) Inventor: FUKUI, Atsushi, Osaka 540-6207 (JP); FUJITA, Masaru, Osaka 540-6207 (JP)
(74) Representative: Vigand, Philippe

(57) **Abstract**

A laser projection device includes a laser light source, a diffusion plate, and a housing. The diffusion plate has an incidence surface and an emission surface and emitted light from the laser light source is incident thereon. A plurality of linear grooves are arranged in at least one of the incidence surface and the emission surface. The housing has an opening through which light diffused by the grooves is emitted in an emitting direction of the laser light source.

## Description

### BACKGROUND

### 1. Technical Field

The present disclosure relates to a laser projection device used in a light source for distance measurement.

### 2. Description of the Related Art

A laser projection device is used in a light source of a distance measuring apparatus.

As a method for the distance measuring apparatus, various distance measuring methods are proposed and used. For example, there are an old triangulation method, a phase difference detection method of measuring a phase difference between light reflected from a measurement target and a light source by performing amplitude modulation on light from the light source, and a time of flight (TOF) method, which has been used in recent years, of measuring a distance by emitting extremely short-pulse light and measuring arrival time of reflected light from a measurement target.

In the distance measuring methods, it is preferable to use a semiconductor laser as a light source since high-frequency modulation or extremely short-pulse waveform is necessary for a small-sized high-power light source in order to make a measurable distance long and improve measuring accuracy.

Safety standards for the use of laser light sources are established from a perspective of the safety of the human body and eye. In Japan, JIS-C6802 is established. It is necessary to satisfy a condition of Class 1, which is a safety standard, in general in a case where there is a possibility that light is emitted to the human eye. It is necessary to make the beam diameter of a laser light large on an emission surface of the projection device in order to satisfy the condition of Class 1 and increase the output of the laser light source. If a light emission diameter on an emission surface of a projection light source device is small when a person saw the projection light source device, a light source image that can be formed on the retina of the eye also becomes small and light concentration becomes high, which is likely to damage the eye. To prevent this, a light source image that can be formed on the retina is made large by making a light emission diameter on the emission surface of the projection light source device large, and the maximum value of light output of the laser light source, at which the eye is not damaged, can be made large.

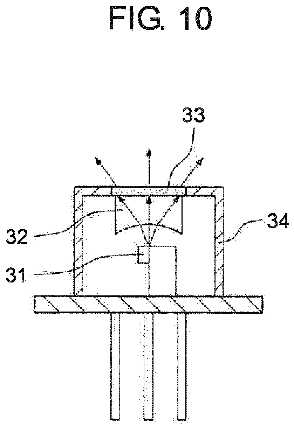

In a projection light source device of the related art, a diffusion plate is disposed at a window of an emitter of a semiconductor laser. FIG. 10 illustrates the projection light source device of the related art disclosed in Japanese Patent Unexamined Publication No. 9-307174 (PTL 1).

FIG. 10 illustrates laser light source 31, concave lens 32 spreading emitted light from laser light source 31, diffusion plate 33, and metal package 34 holding laser light source 31, concave lens 32, and diffusion plate 33.

Emitted light from laser light source 31 is diffused by concave lens 32 and the light is projected to diffusion plate 33. Diffusion plate 33 diffuses light in all directions. A beam diameter on diffusion plate 33 can be made large by using concave lens 32. Although the beam diameter of light from laser light source 31 is several µm, which is extremely small, a beam diameter that is extremely larger than the beam diameter on the emission surface of laser light source 31 is formed on diffusion plate 33 by using diffusion plate 33. Therefore, an image of the light source formed on the retina of the eye becomes large when a person saw the laser, and an upper limit of laser output, at which damage is not inflicted to the eye, can be made large.

### SUMMARY

According to the disclosure, there is provided a laser projection device including a laser light source, a diffusion plate, and a housing.

The diffusion plate has an incidence surface and an emission surface and emitted light from the laser light source is incident thereon.

A plurality of linear grooves are arranged in at least one of the incidence surface and the emission surface.

The housing has an opening through which light diffused by the grooves is emitted in an emitting direction of the laser light source.

According to the disclosure, there is provided another laser projection device including a laser light source, a collimating lens, a diffusion plate, and a housing.

The collimating lens has a first surface, a second surface, a side surface, a first total reflection surface, and a second total reflection surface.

Emitted light from the laser light source is incident on the first surface.

The second surface is opposite to the first surface.

The side surface is disposed between the first surface and the second surface.

The first total reflection surface is disposed at a location of the second surface opposite to the first surface and reflects incident light from the first surface.

The second total reflection surface is disposed on the side surface, reflects light reflected by the first total reflection surface, and makes the reflected light into parallel light.

The collimating lens emits the parallel light made by the second total reflection surface by means of the second surface.

The diffusion plate has an incidence surface and an emission surface and the parallel light from the collimating lens is incident thereon.

A plurality of linear grooves are arranged in at least one of the incidence surface and the emission surface of the diffusion plate.

The housing has an opening through which light diffused by the plurality of grooves in the diffusion plate is emitted in an emitting direction of the laser light source.

### BRIEF DESCRIPTION OF THE DRAWINGS

FIG. 1A is a sectional view of an XY-surface of a laser projection device according to Embodiment 1 seen from a Z-axis direction;
FIG. 1B is a sectional view of an XZ-surface of the laser projection device according to Embodiment 1 seen from a Y-axis direction;
FIG. 1C is a side view of a YZ-surface of the laser projection device according to Embodiment 1 seen from an X-axis direction;
FIG. 2A is a front view of grooves in an incidence surface of a diffusion plate according to Embodiment 1;
FIG. 2B is an enlarged sectional view of the grooves in a middle portion of the diffusion plate according to Embodiment 1;
FIG. 2C is an enlarged sectional view of the grooves in a peripheral portion of the diffusion plate according to Embodiment 1;
FIG. 3A is a front view of grooves in an emission surface of the diffusion plate according to Embodiment 1;
FIG. 3B is an enlarged sectional view of the grooves in the middle portion of the diffusion plate according to Embodiment 1;
FIG. 3C is an enlarged sectional view of the grooves in the peripheral portion of the diffusion plate according to Embodiment 1;
FIG. 4A is an enlarged sectional view illustrating an optical path of a ray in the grooves in the diffusion plate according to Embodiment 1;
FIG. 4B is an explanatory view of a refraction state of light in a projecting shape of the groove in the diffusion plate according to Embodiment 1;
FIG. 4C is an explanatory view of the refraction state of the light in the projecting shape of the groove in the diffusion plate according to Embodiment 1;
FIG. 4D is an explanatory view of the refraction state of the light in the projecting shape of the groove in the diffusion plate according to Embodiment 1;
FIG. 5A is an explanatory view of spread of light from the laser projection device according to Embodiment 1;
FIG. 5B is an explanatory view of the spread of the light from the laser projection device according to Embodiment 1;
FIG. 5C is an explanatory view of the spread of the light from the laser projection device according to Embodiment 1;
FIG. 5D is an explanatory view of the spread of the light from the laser projection device according to Embodiment 1;
FIG. 5E is an explanatory view of the spread of the light from the laser projection device according to Embodiment 1;
FIG. 5F is an explanatory view of the spread of the light from the laser projection device according to Embodiment 1;
FIG. 6A is an explanatory view of grooves in another diffusion plate according to Embodiment 1;
FIG. 6B is an explanatory view of grooves in still another diffusion plate according to Embodiment 1;
FIG. 6C is an explanatory view of grooves in still another diffusion plate according to Embodiment 1;
FIG. 6D is an explanatory view of grooves in still another diffusion plate according to Embodiment 1;
FIG. 7A is a sectional view of an XY-surface of a laser projection device according to Embodiment 2 seen from the Z-axis direction;
FIG. 7B is a perspective view of a collimating lens according to Embodiment 2;
FIG. 8A is an explanatory view of a ray in the collimating lens according to Embodiment 2;
FIG. 8B is an explanatory view of a beam state of an emission surface of the collimating lens according to Embodiment 2 seen from the X-axis direction;
FIG. 9A is an explanatory view of another laser projection device according to Embodiment 2;
FIG. 9B is an explanatory view of still another laser projection device according to Embodiment 2;
FIG. 9C is an explanatory view of still another laser projection device according to Embodiment 2; and
FIG. 10 is a view illustrating a laser projection device of the related art.

### DETAILED DESCRIPTIONS

In FIG. 10, emitted light from laser light source 31 is spread by concave lens 32 and diffusion plate 33 is irradiated with the emitted light. Therefore, it is necessary to make the diffusibility of diffusion plate 33 extremely high in order to make a seeming beam diameter of light from laser light source 1 large. Although light substantially perpendicular to an incidence surface of diffusion plate 33 is incident on a middle portion of diffusion plate 33, the light is obliquely incident on a peripheral portion on the incidence surface of diffusion plate 33. Therefore, it is necessary to make the diffusibility high to an extent of not relying on the angle of incident light in order to emit the same diffused light to the middle portion and the peripheral portion of diffusion plate 33.

When a seeming beam diameter of light from laser light source 31 is small on diffusion plate 33, the luminance of the light source is high, and thus damage can be inflicted to the eye when seeing a projection device. Therefore, it is necessary to use a diffusion plate having extremely high diffusibility in order to ensure the safety of a laser from the projection device, and in order to make a seeming beam diameter on a surface of diffusion plate 33 large. A general frosted glass diffusion plate diffuses light by causing the light to go through multiple reflection on a frosted glass portion. Therefore, when light diffusibility is made high, the proportion of light returning from a diffused surface to a laser light source 31 side becomes large and light use efficiency significantly decreases. In addition, diffusion characteristics of a diffusion plate with high diffusibility is configured such that Lambert diffusion occurs in general, and light becomes weak in an oblique direction.

Hereinafter, embodiments of the disclosure will be described with reference to the drawings.

### (Embodiment 1)

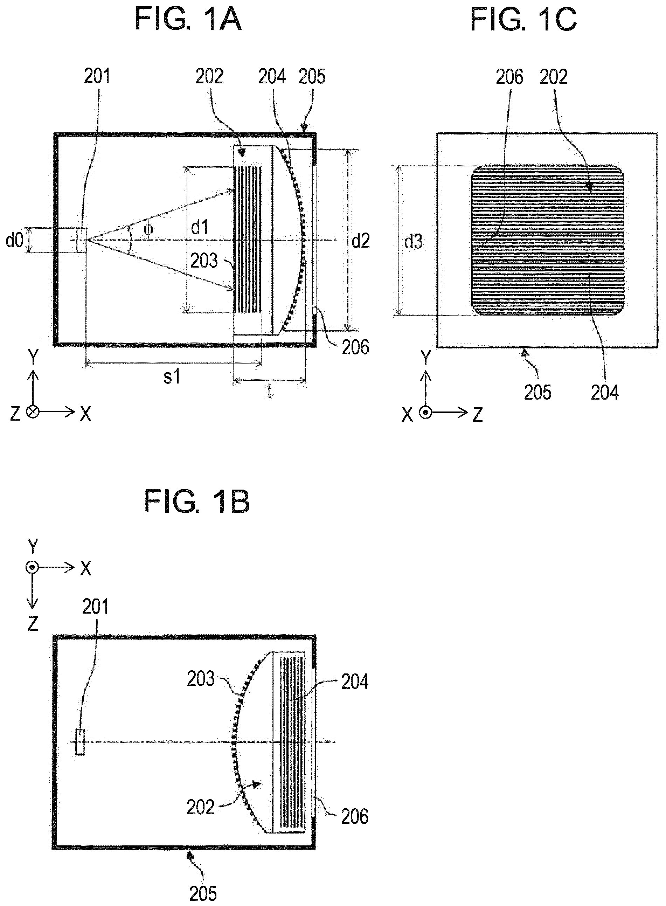

FIGs. 1 to 6 illustrate Embodiment 1 of the disclosure.

FIGs. 1A, 1B, and 1C are schematic views of a laser projection device of Embodiment 1. A page right-hand direction is set as an X-axis, an upward direction is set as a Y-axis, and a page depth direction is set as a Z-axis.

FIG. 1A illustrates an XY-surface of the laser projection device seen from a Z-axis direction. FIG. 1B illustrates an XZ-surface of the laser projection device seen from a Y-axis direction. FIG. 1C illustrates a YZ-surface of the laser projection device seen from an X-axis direction.

Housing 205 is formed of a material that does not transmit light, for example, a metal, including aluminum and stainless steel, or a black resin. Laser light source 201 and diffusion plate 202 are disposed inside housing 205. Diffusion plate 202 is configured of a material which is transparent in the emission wavelength of laser light source 201, such as a resin, including polycarbonate and acrylic, and glass. The shape of a refracting surface that is an incidence surface of diffusion plate 202, on which light from laser light source 201 is incident, is an aspheric cylinder protruding toward the outside in a cylindrical shape, and a length direction thereof is an up-and-down direction (Y-direction). The shape of a refracting surface that is an emission surface of diffusion plate 202 is an aspheric cylinder protruding toward the outside in a cylindrical shape, and a length direction thereof is a horizontal direction (Z-direction). Grooves 203 are disposed in the incidence surface of diffusion plate 202. Emitted light from grooves 203 is set as incident light, and grooves 204 are disposed in the emission surface of diffusion plate 202.

Opening 206 smaller than a groove formed region of grooves 204 in diffusion plate 202 is provided on an emission side of laser light source 201 of housing 205. Emitted light goes outside housing 205 only through opening 206 in housing 205. Area d3 of opening 206 is illustrated in FIG. 1C.

Laser light source 201 is disposed such that a light emitting surface center thereof is on the X-axis, and emits light in a positive direction of the X-axis. The distribution of emitted light is configured such that the center of radiation distribution is a Gaussian distribution on the X-axis, and an angle at which light intensity, which is light intensity in a direction of the center of radiation distribution, becomes 1/(e^2), that is, approximately 0.135 is set as φ in a full-pitch character. In light radiation having a Gaussian distribution, the energy of laser emitted light in an angle range φ of 1/(e^2) is approximately 95%.

The wavelength of light from laser light source 201 is a monochromatic near-infrared wavelength that cannot be perceived by the human eye during light emission. Laser light source 201 is configured by arranging a plurality of semiconductor lasers close to each other on the YZ-surface. By arranging the plurality of semiconductor lasers, the degree of spatial coherence is low and speckle noise can be reduced. The size of the light emitting surface on which the semiconductor lasers are arranged is d0.

By the light source using the semiconductor lasers, the light source can have responsiveness higher than that of a light emitting diode, and pulsed light with a short light emitting time can be formed. Therefore, peak light intensity can be made high even when average energy remains the same. Therefore, in distance measurement, a faraway object can be irradiated with light and be measured.

Grooves 203 are formed such that a plurality of linear grooves having an uneven section are arranged so as to be parallel to the Y-axis in an outer surface of the incidence surface of diffusion plate 202 without a clearance. Groove direction 207 is a length direction of grooves 203. Size d1 of a groove formed region of grooves 203 on the YZ-surface is formed so as to allow most of emitted light from laser light source 201 can be incident on the region. That is, when the farthest distance between laser light source 201 and grooves 203 is set as s1 and the size of the light emitting surface of laser light source 201 is set as d0, size d1 of one side of the groove formed region of grooves 203 is longer than s1 x 2 x tan(φ/2) + d0. That is, a relation of d1 > s1 x 2 x tan(φ/2) + d0 is satisfied.

Grooves 204 are formed such that a plurality of linear grooves having an uneven section are arranged so as to be parallel to the Z-axis in the emission surface of diffusion plate 202 without a clearance. Since the emitted light from laser light source 201 is diffused by grooves 203, the size of the groove formed region of grooves 204 is larger than the size of the groove formed region of grooves 203. When the thickness of the thickest portion of diffusion plate 202 is set as t, and the size of the light emitting surface of laser light source 201 is set as d0, size d2 of the groove formed region of grooves 204 in the YZ-surface is larger than d1 + 2.5 x t + d0. That is, a relation of d2 > d1 + 2.5 x t + d0 is satisfied. Since light diffusion by grooves 203 is diffusion in the Z-axis direction, it is desirable that the groove formed region of grooves 204 in the YZ-surface have a rectangular shape which is long in the Z-axis direction.

Grooves 203 and 204 each have an extrusion structure, that is, a uniform sectional shape, and are disposed such that groove directions of grooves 203 and grooves 204 are orthogonal to each other.

If the number of grooves 203 and 204 is small, a diffused state is likely to change due to a change in the position of diffusion plate 202. Therefore, grooves 203 and 204 are configured by arranging at least ten or more grooves. By configuring in this manner, even when a change in the position of diffusion plate 202 with respect to laser light source 201 has occurred, in particular, displacement on the YZ-surface has occurred, a change in diffused light is equivalent to an effect of one or less groove out of ten grooves, that is, a change of 10% or less.

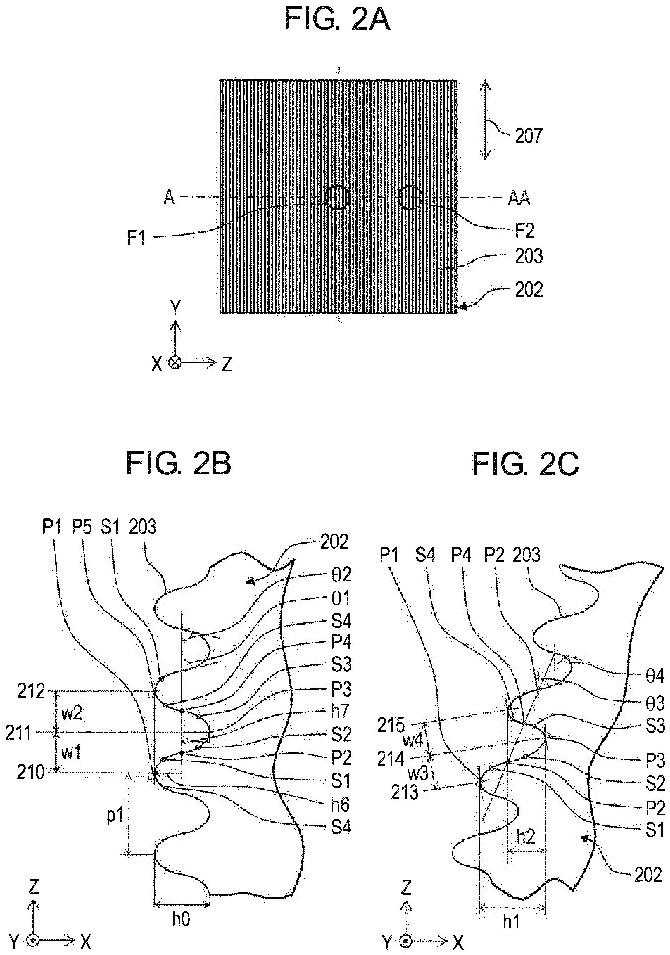

FIGs. 2A, 2B, and 2C illustrate a structure of grooves 203 formed in the incidence surface of diffusion plate 202 of FIG. 1.

FIG. 2A is a front view of grooves 203 in the incidence surface of diffusion plate 202. Groove direction 207 is a direction of grooves 203. FIG. 2B is a sectional view taken along line A-AA in middle portion F1 of FIG. 2A. FIG. 2C is a sectional view taken along line A-AA in peripheral portion F2 of FIG. 2A.

Grooves 203 are formed in groove direction 207 parallel to the Y-axis. As illustrated in FIGs. 2B and 2C, a section of one groove, out of grooves 203, is configured of four slopes, that is, groove slope S1 (first groove slope), groove slope S2 (second groove slope), groove slope S3 (third groove slope), and groove slope S4 (fourth groove slope). Groove slopes S1 to S4 have shapes represented by aspheric equations different from each other.

Groove slope S1 and groove slope S2 are connected to each other at connection point P2 (second connection point) such that the inclinations of tangent lines to the groove slopes are equal to each other.

Similarly, groove slope S2 and groove slope S3 are connected to each other at connection point P3 (third connection point), and groove slope S3 and groove slope S4 are connected to each other at connection point P4 (fourth connection point). Groove slope S4 and groove slope S1 of the next groove are connected to each other at connection point P5, and groove slope S4 of the previous groove and groove slope S1 are connected to each other at connection point P1 (first connection point). The inclinations of tangent lines at respective connection points are configured to be equal to each other.

One groove, out of grooves 203, is configured of a recessed shape, which is configured of groove slope S2 and groove slope S3 connected to groove slope S2 at connection point P3, and a projecting shape, which is configured of groove slope S1 connected to groove slope S2 at connection point P2 and groove slope S4 connected to groove slope S3 at connection point P4. The height of the projecting shape of the groove is formed so as to be larger than the height of the recessed shape or be equal to the height of the recessed shape. That is, height h6 of the projecting shape formed by groove slope S1 and groove slope S4, which are connected to each other at connection point P1 or connection point P5, is equal to or larger than height h7 of the recessed shape formed by groove slope S2 and groove slope S3, which are connected to each other at connection point P3. That is, a relation of h6 ≥ h7 is satisfied.

In other words, one groove, out of grooves 203, is configured of a recessed shape, a first projecting shape, and a second projecting shape.

The recessed shape is configured of groove slope S2 (second groove slope) and groove slope S3 (third groove slope) connected to groove slope S2 at connection point P3 (third connection point).

The first projecting shape is configured of groove slope S1 (first groove slope) connected to groove slope S2 at connection point P2 (second connection point).

The second projecting shape is configured of groove slope S4 (fourth groove slope) connected to groove slope S3 at connection point P4 (fourth connection point).

The height of the projecting shape configured of the groove slope S1 or groove slope S4 is larger than or equal to each other the height of the recessed shape formed by groove slope S2 and groove slope S3.

By making height h6 larger than height h7, the following effects can be obtained.

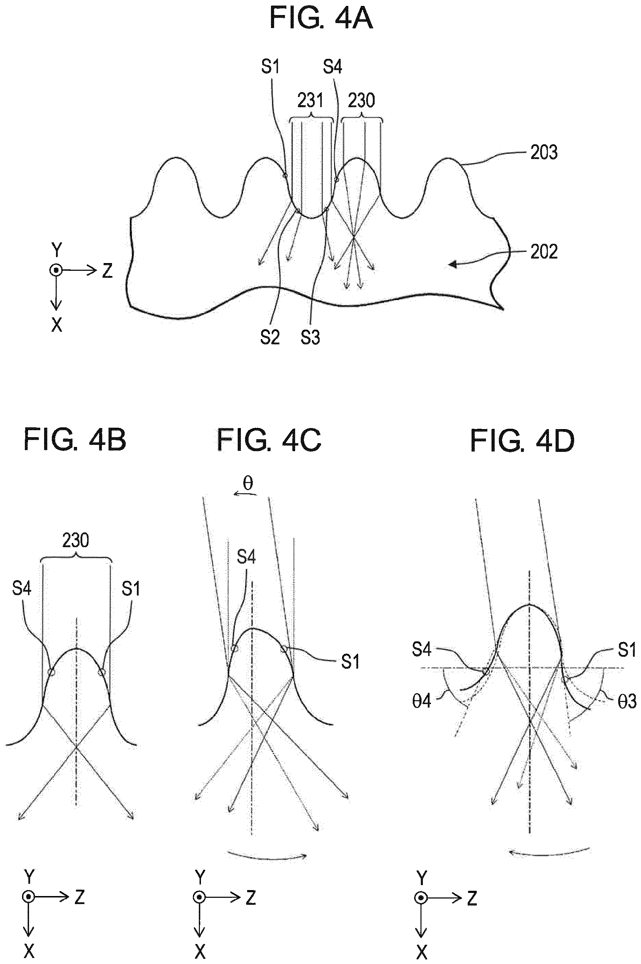

In FIG. 4A, ray 230 incident on the projecting shape configured of groove slope S1 and groove slope S4 diffuses after temporarily concentrating in diffusion plate 202. Ray 231 incident on the recessed shape configured of groove slope S2 and groove slope S3 diffuses and spreads in diffusion plate 202. Therefore, when light diffusion is caused to occur over a wider area, light refracted through the recessed shape is reflected inside diffusion plate 202 by adjacent grooves, and the spread of the light occurs over a narrower area. On the other hand, since light incident on the projecting shape temporarily concentrates, it is unlikely for reflection to occur by adjacent grooves. By making the height of the recessed shape smaller than the height of the projecting shape, light diffusion can occur at a larger spread angle.

In a case where height h6 is made equal to height h7, the light amounts incident on the projecting shape and the recessed shape of one groove in the diffusion plate are equal to each other, and thus light amount distribution on a diffusion plate surface when seen in the positive direction of the X-axis of FIG. 2B can be made the most uniform.

It is preferable that the length of groove slope S1 in the X-axis direction be equal to or smaller than the length of groove slope S2, and the length of groove slope S4 be equal to or smaller than the length of groove slope S3.

A pitch p1 between grooves 203, that is, a distance between adjacent connection points P1 is formed so as to be 0.05 mm or more. That is, a relation of 0.05 mm ≤ p1 is satisfied. A total of groove depths of groove slope S1 and groove slope S2 in the X-axis direction in middle portion F1 of diffusion plate 202 and a total of groove depths of groove slope S3 and groove slope S4 are approximately equal to each other (herein, set as h0). When the inclination of a groove tangent line with respect to the YZ-surface of grooves 203, that is, an angle formed between the groove tangent line and the YZ-surface is set, in middle portion F1, as angle θ1 at connection point P2 and is set as angle θ2 at connection point P4, angle θ1 and angle θ2 are approximately equal to each other. That is, a relation of θ1 ≈ θ2 is satisfied.

Lines each passing through a vertex of the projecting shape formed by groove slope S1 and groove slope S4 from the light emitting surface center of laser light source 201 are set as line 210 and line 212, and a line passing through a base of the recessed shape formed by groove slope S2 and groove slope S3 is set as line 211. When an interval between line 210 and line 211 is set as interval w1 and an interval between line 211 and line 212 is set as interval w2, interval w1 and interval w2 are approximately equal to each other. That is, a relation of w1 ≈ w2 is satisfied.

As described above, in grooves 203 close to middle portion F1, groove slope S1 and groove slope S4 and groove slope S2 and groove slope S3 have symmetrical shapes. The projecting shape formed by groove slope S1 and groove slope S4 and the recessed shape configured of groove slope S2 and groove slope S3 are shapes similar to each other.

Grooves 203 in peripheral portion F2 of diffusion plate 202 are configured as illustrated in FIG. 2C.

Grooves 203 in peripheral portion F2 are configured such that inclination angle θ4 at connection point P4 is equal to larger than inclination angle θ3 at connection point P2, and inclination angle θ4 is equal to larger than inclination angle θ2. That is, a relation of θ3 ≤ θ4 is satisfied, and a relation of θ2 ≤ θ4 is satisfied. The larger inclination angle θ4 is formed, the longer a distance from middle portion F1 to peripheral portion F2 becomes, that is, the more separated away from the X-axis.

Lines each passing through a vertex of the projecting shape formed by groove slope S1 and groove slope S4 from the light emitting surface center of laser light source 201 are set as line 213 and line 215, and a line passing through a base of the recessed shape formed by groove slope S2 and groove slope S3 is set as line 214. When an interval between line 213 and line 214 is set as interval w3 and an interval between line 214 and line 215 is set as interval w4, grooves 203 are formed such that interval w3 and interval w4 are approximately equal to each other. That is, a relation of w3 ≈ w4 is satisfied.

Herein, height h1 of groove slope S1 from groove slope S2 connected at connection point P2 is larger than height h2 of groove slope S4 from groove slope S3 connected at connection point P4. Height h1 of the groove slope close to middle portion F1 of diffusion plate 202 is larger than height h2 of the groove slope close to peripheral portion F2.

Thus, an envelope of grooves 203 has a projecting shape in a negative direction of the X-axis in an XZ-section. Grooves 203 have extrusion shapes and have the same shape in the Y-axis direction regardless of positions in the Y-axis direction in the XZ-section.

Next, a structure of grooves 204 formed on an emission side of diffusion plate 202 will be described.

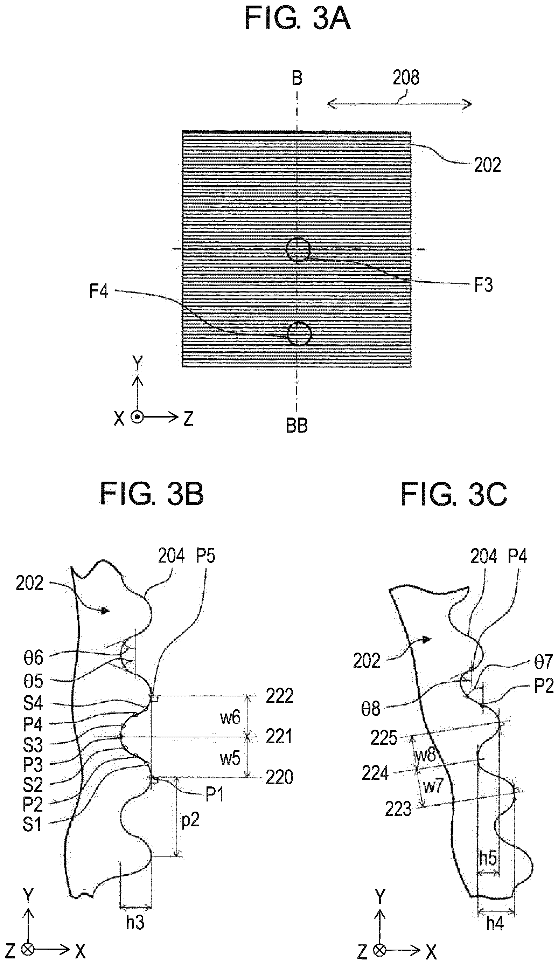

FIG. 3A is a front view of grooves 204 in the emission surface of diffusion plate 202 in Embodiment 1. Groove direction 208 is a direction of grooves 204. FIG. 3B is a sectional view taken along line B-BB in middle portion F3 of FIG. 3A. FIG. 3C is a sectional view taken along line B-BB in peripheral portion F4 of FIG. 3A.

Grooves 204 and grooves 203 have the same sectional shape. The groove direction of grooves 203 and the groove direction of grooves 204 are orthogonal to each other. A difference between grooves 203 and grooves 204 is that grooves 203 are disposed in the incidence surface of diffusion plate 202 in the negative direction of the X-axis, and grooves 204 are disposed on the emission side of diffusion plate 202 in the positive direction of the X-axis.

Groove direction 208 of grooves 204 is a direction parallel to the Z-axis. A section of one groove, out of grooves 204, is configured of four slopes, that is, groove slope S1, groove slope S2, groove slope S3, and groove slope S4. Groove slope S1 to groove slope S4 have shapes represented by aspheric equations different from each other.

Groove slope S1 and groove slope S2 are connected to each other at connection point P2 such that the inclinations of tangent lines to the groove slopes are equal to each other.

Similarly, groove slope S2 and groove slope S3 are connected to each other at connection point P3, and groove slope S3 and groove slope S4 are connected to each other at connection point P4. Groove slope S4 and groove slope S1 of the next groove are connected to each other at connection point P5, and groove slope S4 of the previous groove and groove slope S1 are connected to each other at connection point P1. The inclinations of tangent lines at respective connection points are configured to be equal to each other.

One groove, out of grooves 204, is configured of a recessed shape, which is configured of groove slope S3 and groove slope S2 connected to groove slope S2 at connection point P3, and a projecting shape, which is configured of groove slope S1 connected to groove slope S2 at connection point P2 and groove slope S4 connected to groove slope S3 at connection point P4.

The height of the projecting shape of each of grooves 204 is formed so as to be equal to or larger than the height of the recessed shape, that is, the length of groove slope S1 in the X-axis direction is equal to or larger than the length of groove slope S2, and the length of groove slope S4 is equal to or larger than the length of groove slope S3.

A pitch p2 between grooves 204, that is, a distance between adjacent connection points P1 is formed so as to be 0.05 mm or more. That is, a relation of 0.05 mm ≤ p2 is satisfied. In middle portion F1 of diffusion plate 202, a total of groove depths of groove slope S1 and groove slope S2 in the X-axis direction and a total of groove depths of groove slope S3 and groove slope S4 are approximately equal to each other (herein, set as h3).

When the inclination of a groove tangent line with respect to the YZ-surface of grooves 204, that is, an angle formed between the groove tangent line and the YZ-surface is set, in middle portion F1, as angle θ5 at connection point P2 and is set as angle θ6 at connection point P4, angle θ5 and angle θ6 are approximately equal to each other. That is, a relation of θ5 ≈ θ6 is satisfied.

Lines each passing through a vertex of the projecting shape formed by groove slope S1 and groove slope S4 from the light emitting surface center of laser light source 201 are set as line 220 and line 222, and a line passing through a base of the recessed shape formed by groove slope S2 and groove slope S3 is set as line 221. When an interval between line 220 and line 221 is set as interval w5 and an interval between line 221 and line 222 is set as interval w6, interval w5 and interval w6 are approximately equal to each other. That is, a relation of w5 ≈ w6 is satisfied.

Close to middle portion F3, groove slope S1 and groove slope S4 and groove slope S2 and groove slope S3 have symmetrical shapes. The projecting shape formed by groove slope S1 and groove slope S4 and the recessed shape configured of groove slope S2 and groove slope S3 are shapes similar to each other.

Grooves 204 in peripheral portion F4 of diffusion plate 202 are configured as illustrated in FIG. 3C.

When the inclination angle at connection point P2 is set as inclination angle θ7 and the inclination angle at connection point P4 is set as inclination angle θ8, grooves 204 in peripheral portion F4 are configured such that angle θ8 is equal to larger than angle θ7, and angle θ8 is equal to larger than angle θ6. That is, relations of θ7 ≤ θ8, and θ6 ≤ θ8 are satisfied. The larger inclination angle θ8 is formed, the longer a distance from middle portion F3 to peripheral portion F4 becomes, that is, the more separated away from the

X-axis.

When lines each passing through a vertex of the projecting shape formed by groove slope S1 and groove slope S4 from the light emitting surface center of laser light source 201 are set as line 223 and line 225, and a line passing through a base of the recessed shape formed by groove slope S2 and groove slope S3 is set as line 224, grooves 204 are formed such that interval w7 between line 223 and line 224 and interval w8 between line 224 and line 225 are approximately equal to each other. That is, a relation of w7 ≈ w8 is satisfied.

When a total of groove depths of groove slope S1 and groove slope S2 in the X-axis direction is set as h4, and a total of groove depths of groove slope S3 and groove slope S4 is set as h5, h4 is equal to larger than h5. That is, a relation of h4 ≥ h5 is satisfied. Thus, an envelope of grooves 204 has a projecting shape in the positive direction of the X-axis in the XZ-section. Grooves 204 have extrusion shapes and have the same shape in the Z-axis direction regardless of positions in the Z-axis direction in an XY-section.

When the refractive index of diffusion plate 202 is set as n, inclination angles θ5, θ6, θ7, and θ8 of grooves 204 with respect to the YZ-surface are formed to be angles that do not exceed asin(1/n).

As for the groove pitch with respect to the groove depth, that is, an aspect ratio, a relationship between h0/p1, which is the aspect ratio of grooves 203, and h3/p2, which is the aspect ratio of grooves 204, satisfies h0/p1 ≥ h3/p2, in middle portion F1 and middle portion F3 of diffusion plate 202.

An operation of the laser projection device configured as described above will be described.

As illustrated in FIGs. 1A to 1C, emitted light from laser light source 201 is incident on grooves 203 in the incidence surface of diffusion plate 202. Since the size of the groove formed region of grooves 203 on the YZ-surface, that is, the spread of light from laser light source 201 is wide, most of light from laser light source 201 is incident on grooves 203 in diffusion plate 202.

If the refractive index of diffusion plate 202 is set as n, a maximum angle of refraction through grooves 203 with respect to the YZ-surface is obtained when angle θ1 is 90°. At this time, when light parallel to the X-axis direction is incident on diffusion plate 202 and refracts, the light becomes a ray at an angle of 90°-asin(1/n) with respect to the YZ-surface. When the refractive index of a resin is set to, for example, a relation of n = 1.59, 90°-asin(1/n) = 51° is satisfied. Thus, when the thickness of diffusion plate 202 is set as thickness t, emitted light from grooves 203 has a size of d1 + 2 x tan(51°) x t + d0 = d1 + 2.5 x t + d0 on grooves 204. Since size d2 of the groove formed region of grooves 204 on the YZ-surface is formed to be larger than at least d1 + 2.5 x t + d0, most of emitted light from grooves 203 is incident on grooves 204.

Emitted light from diffusion plate 202 passes through opening 206 in housing 205 and is emitted from the laser projection device as irradiation light. Since opening 206 in housing 205 is smaller than the size of the groove formed region of grooves 204 on the emission side of diffusion plate 202, only light diffused by diffusion plate 202 is emitted from housing 205. Light that is not diffused by diffusion plate 202 has extremely high luminance, and thus there is a possibility of damaging the eye when viewed directly, which is extremely dangerous. Therefore, by emitting only diffused light from housing 205, the laser projection device can safely perform irradiation.

By making a beam diameter, which is formed by light emitted from laser light source 201 spreading on diffusion plate 202, large, the output of the laser light source, which is classified as laser Class 1, can be made large. By making a distance between laser light source 201 and diffusion plate 202 longer, a beam diameter on diffusion plate 202 can be made large in proportion to the distance.

FIGs. 4A to 4D illustrate a state of light incident on grooves 203 in diffusion plate 202.

In FIG. 4A, light incident on grooves 203 refracts through groove slopes S1 to S4, and is propagated inside diffusion plate 202. Ray 230 incident on the projecting shape formed by groove slope S1 and groove slope S4, which are connected to each other at connection point P1 or connection point P5, is diffused after concentrating inside diffusion plate 202 due to the action of a convex lens. Ray 231 incident on the recessed shape formed by groove slope S2 and groove slope S3, which are connected to each other at connection point P3, is diffused due to the action of a concave lens.

Thus, light incident on grooves 203 diffuses in a groove arranging direction of grooves 203, that is, mainly in the XZ-surface. Since light diffuses only by refractive action, light reflection on a laser light source 201 side is the only reflection on outer surfaces of grooves 203, and thus light can be efficiently diffused. During the outer surface reflection of grooves 203, most of light is incident on slopes of grooves, and does not return to the laser light source 201 side even when the outer surface reflection occurs on the recessed shape formed by groove slope S2 and groove slope S3.

In addition, although outer surface reflection occurs on the projecting shape formed by groove slope S1 and groove slope S4 and reflected light is likely to return to the laser light source 201 side, the amount of light returning to the laser light source 201 side can be reduced to the minimum since the area of the projecting shape is configured so as to be smaller than the area of the recessed shape.

In FIG. 2B, in the vicinity of middle portion F1 of diffusion plate 202, light incident from laser light source 201 on grooves 203 is light substantially parallel to the X-axis, and has an angle with respect to the X-axis in peripheral portion F2 as illustrated in FIG. 2C.

FIGs. 4B to 4D illustrate refraction of light through the projecting shape of grooves 203.

FIG. 4B illustrates a groove shape in middle portion F1 of diffusion plate 202. A state where light parallel to the X-axis is incident on one groove out of grooves 203 is illustrated. Refraction of light through groove slope S1 and refraction of light through groove slope S4 are the same, and are substantially symmetrical light diffusion with respect to the X-axis.

FIG. 4C illustrates a case where light at angle θ with respect to the X-axis is incident on groove 203 in middle portion F1. At this time, also the angle of diffused light refracted through the groove is shifted away from a direction of θ as a whole as in incident light. When the spread of emitted light from laser light source 201 becomes wide, light substantially parallel to the X-axis direction is incident on middle portion F1 of diffusion plate 202, but light having an angle with respect to the X-axis is incident on groove 203 as nearing peripheral portion F2. Therefore, also a direction of the center of the spread of light diffusion by groove 203 changes in a direction shifted away from the X-axis as nearing peripheral portion F2. Consequently, light spreads outside an irradiation region more than necessary in peripheral portion F2 of diffusion plate 202, a light amount in the irradiation region decreases, and thus the light efficiency of the laser projection device decreases.

As illustrated in FIG. 4D, in peripheral portion F2 of diffusion plate 202, a groove shape is disposed after being rotated about the Y-axis in a direction opposite to angle θ of light from laser light source 201. Accordingly, the center of the spread of diffused light from groove 203 can face the X-axis direction. A groove slope of groove 203, which is close to middle portion F1 of diffusion plate 202, that is, the inclination of groove slope S4 is made small to make a refraction angle small. On the contrary, a groove slope close to peripheral portion F2 of diffusion plate 202, that is, the inclination of groove slope S1 is made large to make a refraction angle large. Accordingly, a direction of the center of the spread of light diffusion by groove 203 in peripheral portion F2 can approach the X-axis. At this time, inclination angle θ3 at connection point P4 is larger than inclination angle θ4 at connection point P2.

As described above, by making the shapes of grooves 203 in diffusion plate 202 such that the inclination angle of groove slope S1 is larger than the inclination angle of groove slope S4 from middle portion F1 to peripheral portion F2, the spread of light diffusion by grooves 203 can be made the same regardless of a place. Consequently, a light amount decrease in an irradiation region can be prevented.

Although the projecting shape formed by groove slope S1 and groove slope S4 of groove 203 is illustrated in FIGs. 4B to 4D, the same applies to the recessed shape formed by groove slope S2 and groove slope S3.

In FIG. 4A, light incident on groove slope S1 and groove slope S2 refracts clockwise with respect to the Y-axis. In addition, light incident on groove slope S3 and groove slope S4 refracts counterclockwise with respect to the Y-axis. In middle portion F1 of diffusion plate 202, as illustrated in FIG. 2B, width w1 of light incident on groove slope S1 and groove slope S2 and width w2 of light incident on groove slope S3 and groove slope S4 are equal to each other. Also in peripheral portion F2 of diffusion plate 202, as illustrated in FIG. 2C, width w3 of light incident on groove slope S1 and groove slope S2 and width w4 of light incident on groove slope S3 and groove slope S4 are equal to each other. Consequently, light diffusion by grooves 203 occurs such that the center of the spread of diffusion is symmetrical in the X-axis direction over the entire region ranging from middle portion F1 to peripheral portion F2.

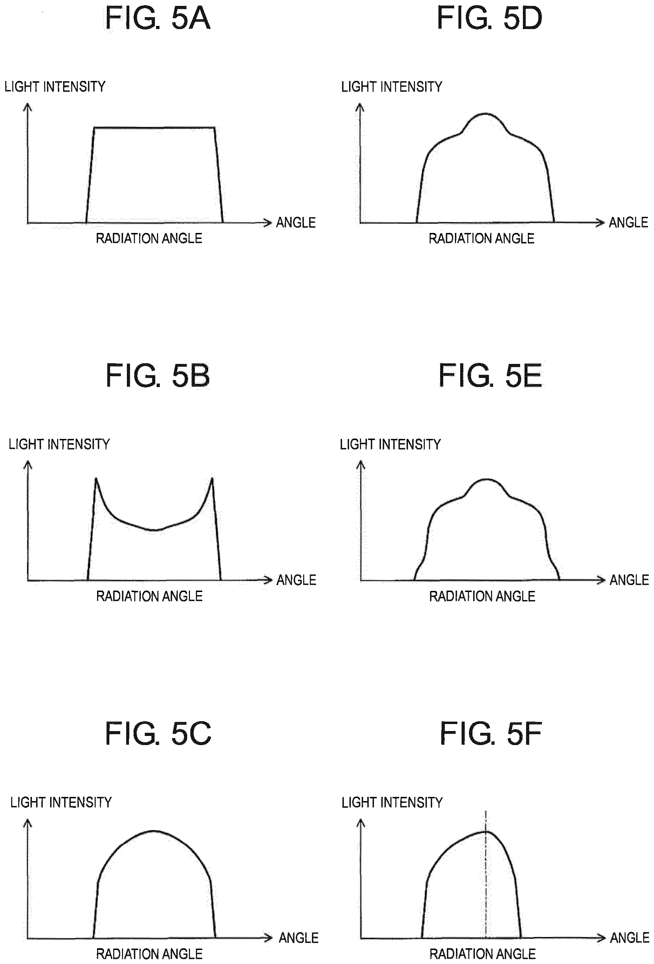

FIGs. 5A to 5F show angle radiation distribution of emitted light from diffusion plate 202 on the XZ-section or the XY-section. By changing aspheric coefficients of sectional shapes of groove slope S1, groove slope S2, groove slope S3, and groove slope S4 of each of grooves 203 or grooves 204, angle radiation distribution can be changed.

In FIG. 5A, light intensity is constant regardless of an angle. In FIG. 5B, light intensity increases in a direction where an angle is large. In FIG. 5C, light intensity decreases in the direction where an angle is large.

In FIGs. 5D and 5E, light intensity increases partially in the middle or a place where an angle is large.

In FIG. 5F, angle radiation distribution is asymmetrical, and is formed by changing groove slope S3 and groove slope S4 with respect to groove slope S1 and groove slope S2.

Although it is not necessary to change groove shapes in peripheral portions F2 and F4 of diffusion plate 202 illustrated in FIGs. 2C and 3C if emitted light from laser light source 201 is made into parallel light by a collimating lens, a light loss occurs due to outer surface reflection by the collimating lens. By changing the groove shapes of diffusion plate 202 from middle portions F1 and F3 to peripheral portions F2 and F4, light can be efficiently diffused and emitted to a necessary irradiation region from diffusion plate 202 without using a collimating lens.

Light, which is incident on grooves 203 in diffusion plate 202 and is diffused by refraction, propagates in diffusion plate 202, and is incident on grooves 204 disposed in the emission surface of diffusion plate 202. Since the groove formed region of grooves 204 is formed so as to be larger than the groove formed region of grooves 203, most of light diffused by grooves 203 is incident on grooves 204. Also light diffusion by grooves 204 is the same as light diffusion by grooves 203, an optical path of light is changed by refraction, and the light is diffused.

Since grooves 203 and grooves 204 each have an extrusion structure in which grooves are arranged, each groove spreads incident light in the groove arranging direction. Since the groove arranging directions of grooves 203 and grooves 204 are orthogonal to each other, emitted light from diffusion plate 202 becomes planarly spread diffused light.

In addition, inclination angles θ5, θ6, θ7, and θ8 of grooves 204 are asin(1/n), that is, are formed as inclination angles which do not exceed at least a total reflection angle with respect to light which has entered parallel to the X-axis. Therefore, a configuration where total reflection is unlikely to occur on grooves 204 and light is unlikely to return to the laser light source 201 side is adopted. Consequently, the light efficiency of diffusion plate 202 can be made high.

Since laser light source 201 emits monochromatic light, an effect of diffraction of light is generated on diffusion plate 202 having grooves at regular intervals. When the wavelength of light from laser light source 201 is set as λ, and the pitch between grooves 203 is set as p1, an angle interval of diffracted light is sin(λ,/p1). When the wavelength of light from laser light source 201 is set to, for example, 950 nm and the groove pitch is set to 0.1 mm, a diffraction angle becomes approximately 1°, which is sufficiently smaller than a minimum spread angle of diffusion plate 202 of 10°, and thus an effect of diffraction is small. When the groove pitch is 0.05 mm, the diffraction angle becomes 2°, and thus an effect on a spread angle is still small. When the groove pitch is 0.025 mm or less, the diffraction angle becomes 4°, having a rather large effect on a minimum spread angle. Thus, it is preferable that the groove pitch be 0.05 mm or more, and it is more preferable that a groove pitch be 0.1 mm or more. When the groove pitch is small and a diffraction angle becomes larger, strong light is generated in a specific direction, thereby decreasing the uniformity of diffused light.

It is necessary to make the inclinations of grooves in diffusion plate 202 large in order to make the spread angle of light large on diffusion plate 202, and thus a groove depth becomes great. Since a groove shape is likely to be damaged when a groove depth with respect to a groove pitch, that is, an aspect ratio is made large, it is desirable that an aspect ratio be 2 or less at most. At this time, when the groove pitch of diffusion plate 202 is set to 0.1 mm, a groove depth becomes 0.1 mm, and thus it is necessary for thickness t of diffusion plate 202 to become at least 0.2 mm or more. When the strength of diffusion plate 202 is taken into account, it is desirable that the thickness be 0.5 mm or more.

When the thickness of diffusion plate 202 is made large, light spreads inside diffusion plate 202 due to diffusion by grooves 203. Thus, the size of diffusion plate 202 on the YZ-surface needs to be made large. When thickness t is 1 mm, it is necessary to make the size larger by 2.5 mm. When thickness t is 10 mm, it is necessary to make the size larger by 25 mm. When thickness t is 30 mm, it is necessary to make the size larger by 75 mm. In order to make the laser projection device smaller and lighter, it is desirable the thickness of diffusion plate 202 be 30 mm or less, and it is preferable that the thickness be 10 mm or less if possible.

Diffusion plate 202 can be made by injection molding in which a mold is used. Since the shapes of grooves 203 and 204 in diffusion plate 202 are smooth, the grooves are unlikely to receive effects of friction occurred in a process of manufacturing diffusion plate 202 and deformation caused by a transfer defect of molding. When an inclination angle is locally large such as in an edge, unnecessary reflection or stray light appears in the vicinity of the edge, diffusion can spread unexpectedly due to friction of an edge portion, and thus the light efficiency of the diffusion plate is likely to decrease. For example, in shaping, a mold can be easily made by machining in a short period of time, and the diffusion plate can be made by injection molding at affordable costs since the grooves in the diffusion plate are smoothly curved and have extrusion shapes.

According to such a configuration, by diffusing emitted light from laser light source 201 by diffusion plate 202 having grooves 203 and 204, each of which is configured of four groove slopes, by means of refraction, a light loss in the diffusion plate can be made small and light having a wide spread angle can be emitted. In addition, by making a distance between laser light source 201 and diffusion plate 202 longer, the seeming size of light emitted by the light source on diffusion plate 202 is made large, the output of a laser, which is classified as laser Class 1, can be made large, and thus a laser projection device capable of bright lighting can be realized.

### (Embodiment 2)

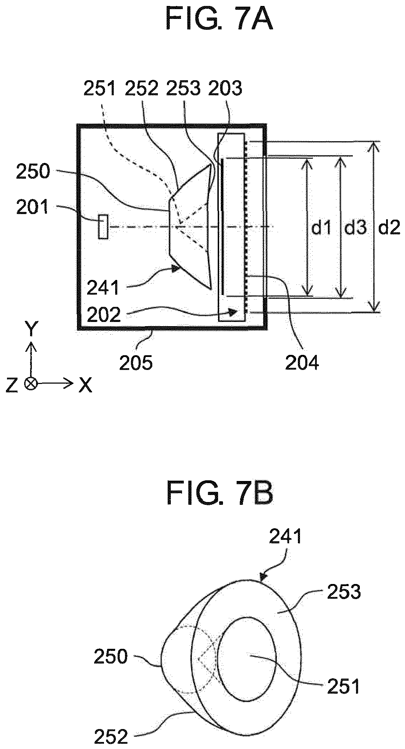

FIGs. 7A and 7B illustrate a laser projection device of Embodiment 2. Configuration elements which are the same as in FIG. 1 will be assigned with the same reference signs and description thereof will be omitted.

Laser light source 201, collimating lens 241, and diffusion plate 202 are disposed inside housing 205 of the laser projection device of Embodiment 2. Both an incidence surface and an emission surface of diffusion plate 202 of Embodiment 2 have a flat-plate shape.

FIG. 7B is a perspective view of collimating lens 241. A structure of grooves 203 formed in the incidence surface of diffusion plate 202 is the same as in Embodiment 1.

Collimating lens 241 disposed between laser light source 201 and diffusion plate 202 has a total reflection surface which makes emitted light from laser light source 201 into incident light, makes a beam diameter large, and makes the emitted light into parallel light. Incidence surface 250 (first surface) of collimating lens 241 is a transmitting surface having a projecting conical shape, and emitted light from laser light source 201 is incident thereon.

First total reflection surface 251 having a recessed conical shape is formed in an emission surface of collimating lens 241. First total reflection surface 251 causes incident light to incidence surface 250 to be totally reflected. The angle of first total reflection surface 251 is approximately 45° with respect to the X-axis. It is desirable for the angle to be 50° or less since total reflection does not occur when the angle is large.

Second total reflection surface 252 having an aspheric shape is formed on a side surface of collimating lens 241. Second total reflection surface 252 totally reflects light again, which is totally reflected by first total reflection surface 251, and makes the light into light parallel to the X-axis direction.

Recessed emission surface 253 (second surface) having a conical shape is formed in a surface of collimating lens 241 which emits light. Emission surface 253 transmits light, which is totally reflected by first total reflection surface 251 and is made into parallel light so as to be emitted from collimating lens 241.

Grooves 203 are formed in the incidence surface of diffusion plate 202, and grooves 204 are formed in the emission surface. Incident light to diffusion plate 202 is made into substantially parallel light by collimating lens 241, and becomes light in the X-axis direction. The groove shapes of grooves 203 are formed such that the groove shapes illustrated in FIG. 2B are disposed from middle portion F1 to peripheral portion F2 of diffusion plate 202. Similarly, the groove shapes of grooves 204 are formed such that groove shapes illustrated in FIG. 3B are disposed from middle portion F3 to peripheral portion F4 of diffusion plate 202. Thus, a groove envelope of diffusion plate 202 has a flat-plate shape.

Since the beam diameter of emitted light from laser light source 201 is expanded by collimating lens 241, size d1 of the groove formed region of grooves 203 is formed so as to be larger than at least the size of the second total reflection surface of collimating lens 241.

An operation of the laser projection device configured as described above will be described.

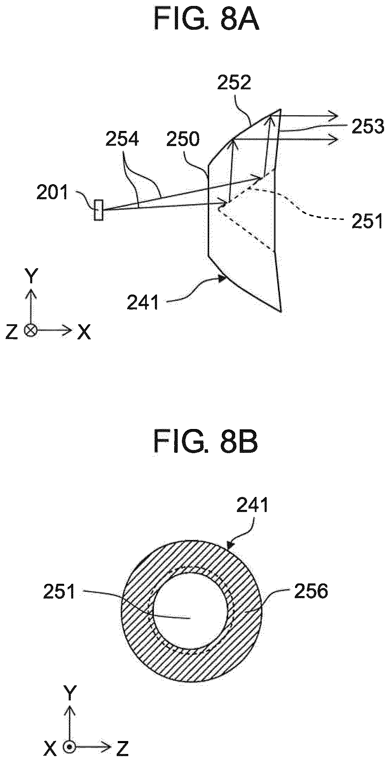

FIG. 8A is an explanatory view of an optical path in collimating lens 241 of Embodiment 2.

Light from laser light source 201 is emitted in the X-axis direction, and is incident on incidence surface 250 of collimating lens 241. Since incidence surface 250 has a projecting conical shape, light from laser light source 201 concentrates and most of the light is incident on first total reflection surface 251. Most of the light incident on first total reflection surface 251 is totally reflected, and the light is incident on second total reflection surface 252 having an aspheric shape formed in the side surface of collimating lens 241. At this time, since emission surface 253 of collimating lens 241 has a recessed conical shape, the light totally reflected by first total reflection surface 251 is incident on second total reflection surface 252 without being incident on emission surface 253. The light totally reflected by second total reflection surface 252 is made into parallel light such that emitted light from emission surface 253 becomes parallel light by the aspheric shape of second total reflection surface 252.

The light made into parallel light by collimating lens 241 is diffused by grooves 203 disposed in the incidence surface of diffusion plate 202 by means of refraction through the XZ-surface, and is diffused by grooves 204 disposed in the emission surface by means of refraction through the XY-surface. The light diffused by diffusion plate 202 is emitted through the opening of housing 205.

By collimating lens 241 changing an optical path in a direction perpendicular to the X-axis by means of first total reflection surface 251 and returning the optical path again in the X-axis direction by means of second total reflection surface 252, a seeming beam diameter can be made large by the thickness of collimating lens 241.

FIG. 8B illustrates a beam state on the emission surface of collimating lens 241 seen in the X-axis direction. 256 indicates the shape of a beam from collimating lens 241. A portion of first total reflection surface 251 does not emit light, and thus donut-shaped light is emitted from the remaining portion.

According to such a configuration, emitted light from laser light source 201 is made so as to have a large beam diameter by collimating lens 241 having the two total reflection surfaces, and the light is diffused by diffusion plate 202 having grooves 203 and 204, each of which is configured of four groove slopes, by means of refraction. Therefore, a light loss in the diffusion plate can be made small, and thus light having a wide spread angle can be emitted. Since a beam diameter is made large by collimating lens 241, a laser projection device that can make the output of a laser, which is classified as laser Class 1, large and that is capable of bright lighting can be realized.

Although a configuration, in which the collimating lens is not used, is adopted and a light loss caused by outer surface reflection on the collimating lens can be reduced in Embodiment 1, a seeming beam diameter on diffusion plate 202 becomes small when a distance between laser light source 201 and diffusion plate 202 is made small.

On the other hand, in Embodiment 2, due to a configuration where collimating lens 241 making use of total reflection is used, the beam diameter of light from laser light source 201 can be made large at a short distance. Therefore, by making a seeming beam diameter on diffusion plate 202 large and reducing luminance on diffusion plate 202, output from laser light source 201, which is classified as laser Class 1, is increased and a bright laser projection device can be realized.

Although a light source in which a plurality of semiconductor laser are arranged to lower spatial coherence is used as laser light source 201 in each of the embodiments, a light source with low spatial coherence, such as a multimode semiconductor laser, may be used.

Alternatively, a light emitting diode or a superluminescent diode (SLD) with a small light emission diameter may be used. A single-mode semiconductor laser may be used if speckle noise may be increased. In addition, a HeNe laser or an argon gas laser may be used if the device may be increased in size.

Although the wavelength of light from laser light source 201 is near-infrared in each of the embodiments, visible light may be used when measurement light may be seen. Alternatively, ultraviolet light may be used.

Although diffusion plate 202 is disposed inside housing 205 in Embodiment 2, diffusion plate 202 may be disposed outside housing 205. Disposing inside is advantageous in terms of preventing the falling of diffusion plate 202 caused by a shock.

In each of the embodiments, a transparent flat cover may be disposed outside diffusion plate 202 in order to prevent damage caused by an external shock. When the cover is disposed, an irradiation light amount of approximately 10% decreases due to outer surface reflection.

Although light is planarly diffused by forming grooves 203 in the incidence surface of diffusion plate 202, forming grooves 204 in the emission surface of diffusion plate 202, and making the groove directions perpendicular to each other in each of the embodiments, a configuration where grooves 204 are omitted and only grooves 203 are provided in a case where diffusion in one-axis direction is enough may be adopted.

In addition, if it is sufficient that the spread angle of light caused by diffusion is, for example, 90° or less, a groove formed surface may be either on a side of the incidence surface of diffusion plate 202 or on a side of the emission surface.

If grooves are formed in the emission surface of diffusion plate 202, reflected light from the emission surface to the laser light source 201 side increases when a diffusion spread angle becomes large, that is, when an aspect ratio of a groove depth to a groove pitch becomes large, thereby decreasing light efficiency. Therefore, it is desirable that the grooves in diffusion plate 202 be disposed on an incidence side.

In FIG. 2C, by making interval w3 and interval w4 approximately equal to each other, the center of diffusion spread of grooves 203 can be made symmetrical with respect to the X-axis direction. However, a ratio between interval w3 and interval w4 and aspheric coefficients of groove slopes S1 to S4 may be changed to form asymmetrical spread with respect to the X-axis. A reflection preventing film may formed on the outer surface of diffusion plate 202 to reduce outer surface reflection.

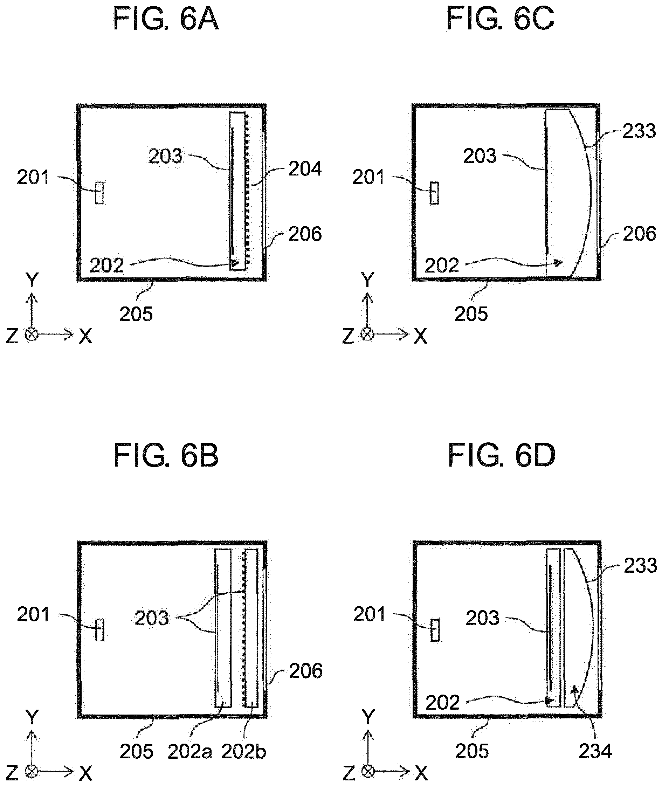

FIGs. 6A to 6D are explanatory views of grooves 203 and 204 of another diffusion plate 202. Although the shape of diffusion plate 202 is made such that an envelope thereof is curved in Embodiment 1 described above, the incidence surface and the emission surface of diffusion plate 202 may have a flat-plate shape as illustrated in FIG. 6A. At this time, relations of w3 < w4 and w7 < w8 are satisfied. Therefore, in peripheral portions F2 and F4 of diffusion plate 202, a direction of the center of the spread of diffused light has an angle with respect to the X-axis. Although grooves 203 are formed in the incidence surface of one diffusion plate and grooves 204 are formed in the emission surface, diffusion plate 202 may be divided into two diffusion plates 202a and 202b. Diffusion plate 202a may be provided with grooves 203 and diffusion plate 202b may be provided with grooves 204. In addition, as illustrated in FIG. 6B, a configuration where two diffusion plates 202, in which only grooves 203 are formed, are used and a groove arranging direction of grooves 203 of the second diffusion plate is rotated 90° about the X-axis may be adopted. Since outer surface reflection increases when two diffusion plates are used, an irradiation light amount from the laser projection device reduces by approximately 10%. Both an incidence surface and an emission surface of diffusion plate 202a of FIG. 6B have a flat-plate shape.

In Embodiment 1 described above, as illustrated in FIG. 6C, an envelope of grooves 203, which is in the incidence surface of diffusion plate 202, may be flat and grooves may not be disposed in the emission surface. Lens surface 233 having a cylindrical shape of which a section, in which a cylinder axis is parallel to a direction where grooves 203 are arranged, is an aspheric surface. In grooves 203, light is diffused in the XZ-surface while light is collimated in the XY-surface by the cylindrical shape having an aspheric surface, and light that spreads narrowly may be formed. In addition, lens surface 233 may have an aspheric lens shape. Diffusion plate 202 of FIG. 6C is the same as in FIG. 1A except that grooves 204 are not formed in the emission surface.

In Embodiment 1 described above, as illustrated in FIG. 6D, grooves 203 are formed on the incidence side of diffusion plate 202, grooves are not formed on the emission side, and the emission side is flat. Lens 234 that receives emitted light from diffusion plate 202 and has an emission surface having a cylindrical shape of which a section, in which a cylinder axis is parallel to a direction where grooves 203 are arranged, is an aspheric surface may be disposed. In grooves 203, light is diffused in the XZ-surface while light is collimated in the XY-surface by the cylindrical shape having an aspheric surface, and light that spreads narrowly may be formed. In addition, lens surface 233 may have an aspheric lens shape. Diffusion plate 202 of FIG. 6D is the same as diffusion plate 202a of FIG. 6B.

In Embodiment 2 described above, incidence surface 250 has a projecting conical shape, light from laser light source 201 concentrates, and the amount of light to first total reflection surface 251 increases. However, when emitted light from laser light source 201 spreads narrowly and light concentration is not necessary, or when the amount of light transmitted through incidence surface 250, that is, light directly emitted from emission surface 253 increases and the light may be diffused, the shape of incidence surface 250 may be flat.

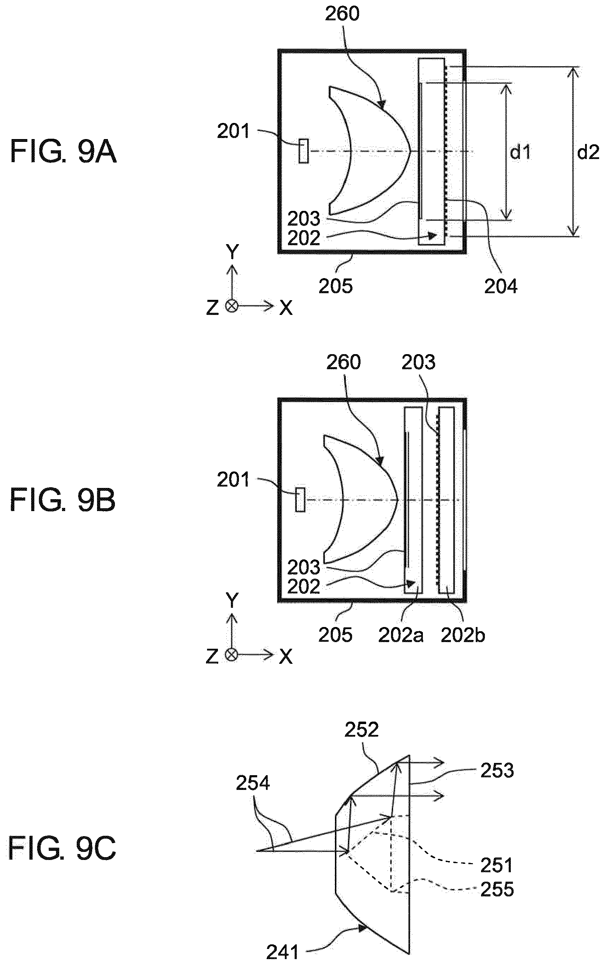

In Embodiment 2 described above, as illustrated in FIG. 9A, a double-sided aspheric lens may be used as a collimating lens, and diffusion plate 202 having the incidence surface in which grooves 203 are disposed and the emission surface in which grooves 204 are disposed may be used. However, due to collimating lens 241 making use of total reflection, a seeming beam diameter becomes small and also a lens thickness becomes large. Diffusion plate 202 of FIG. 9A is the same as in FIG. 7A.

In Embodiment 2 described above, as illustrated in FIG. 9B, a double-sided aspheric lens may be used as a collimating lens. Two diffusion plates 202a and 202b, in which grooves 203 are disposed in the respective incidence surfaces, may be used, and may be disposed such that a groove direction of first diffusion plate 202a and a groove direction of second diffusion plate 202b are orthogonal to each other. However, due to the collimating lens making use of total reflection, a seeming beam diameter becomes small and also a lens thickness becomes large. Since two diffusion plates are used, outer surface reflection increases, decreasing light efficiency. Diffusion plates 202a and 202b of FIG. 9B are the same as in FIG. 6B.

In Embodiment 2 described above, as illustrated in FIG. 9C, the shape of emission surface 253 may be made flat, instead of a conical shape, by adding tapered cylindrical surface 255 to the back of first total reflection surface 251 of collimating lens 241.

In Embodiment 2 described above, since incident light to diffusion plate 202 is made into parallel light by collimating lens 241, grooves 203 in the incidence surface of diffusion plate 202 and grooves 204 in the emission surface of the diffusion plate are flat. However, emitted light from collimating lens 241 may be emitted in a diffused state without completely being made into parallel light, and diffusion plate 202 may be curved as in Embodiment 1.

In the laser projection device of the disclosure, emitted light from the laser light source is diffused by refraction through the slopes of the grooves formed in the diffusion plate. Therefore, a light loss in the diffusion plate can be made small, and thus light having a wide spread angle can be emitted.

In addition, by making a beam diameter large by the collimating lens having two total reflection surfaces and by causing emitted light from the laser light source to be incident on the diffusion plate, the output of a Class 1 laser can be made large. Therefore, a laser projection device capable of bright lighting can be realized.

The laser projection device of the disclosure can be applied to a light source for a distance sensor of home appliances such as an in-vehicle sensor and a crime prevention sensor for outdoor use and an air conditioner and a lighting for indoor use.

## Claims

1. A laser projection device comprising:
a laser light source;
a diffusion plate that has an incidence surface and an emission surface and, on which emitted light from the laser light source is incident, a plurality of linear grooves are arranged in at least one of the incidence surface and the emission surface; and
a housing that has an opening through which light diffused by the plurality of linear grooves is emitted in an emitting direction of the laser light source.

2. A laser projection device comprising:
a laser light source;
a collimating lens having:
a first surface on which emitted light from the laser light source is incident;
a second surface opposite to the first surface;
a side surface disposed between the first surface and the second surface;
a first total reflection surface which is disposed at a location of the second surface opposite to the first surface and reflects incident light from the first surface; and
a second total reflection surface which is disposed on the side surface, reflects light reflected by the first total reflection surface, and makes the reflected light into parallel light, the collimating lens emitting the parallel light made by the second total reflection surface from the second surface;
a diffusion plate which has an incidence surface and an emission surface, and on which the parallel light from the collimating lens is incident, a plurality of linear grooves are arranged in at least one of the incidence surface and the emission surface; and
a housing that has an opening through which light diffused by the plurality of linear grooves in the diffusion plate is emitted in an emitting direction of the laser light source.

3. The laser projection device of Claim 2,
wherein the laser light source is configured by arranging a plurality of semiconductor lasers close to each other.

4. The laser projection device of Claim 2,
wherein each of sections of the plurality of grooves in the diffusion plate is configured of four curved groove slopes including a first groove slope, a second groove slope, a third groove slope, and a fourth groove slope, and
the adjacent groove slopes are connected to each other at a connection point such that inclination angles are approximately equal to each other.

5. The laser projection device of Claim 4,
wherein a groove, among the plurality of grooves in the diffusion plate, has
a recessed shape configured of the second groove slope and the third groove slope connected to the second groove slope at a third connection point,
a first projecting shape formed by the first groove slope connected to the second groove slope at a second connection point,
a second projecting shape formed by the fourth groove slope connected to the third groove slope at a fourth connection point, and
a height of at least one of the first projecting shape or the second projecting shape is larger than or equal to a height of the recessed shape formed by the second groove slope and the third groove slope.

6. The laser projection device of Claim 4,
wherein a groove, among the plurality of grooves in the diffusion plate, has
a recessed shape configured of the second groove slope and the third groove slope connected to the second groove slope at a third connection point,
a first projecting shape formed by the first groove slope connected to the second groove slope at a second connection point, and
a second projecting shape formed by the fourth groove slope connected to the third groove slope at a fourth connection point,
a height of the first groove slope from the second groove slope connected at the second connection point is larger than a height of the fourth groove slope from the third groove slope connected at the fourth connection point, and
a height of a groove slope close to a middle of the diffusion plate is larger than a height of a groove slope close to a periphery of the diffusion plate.

7. The laser projection device of Claim 4,
wherein a groove, among the plurality of grooves in the diffusion plate, has
a recessed shape configured of the second groove slope and the third groove slope connected to the second groove slope at a third connection point,
a first projecting shape formed by the first groove slope connected to the second groove slope at a second connection point, and
a second projecting shape formed by the fourth groove slope connected to the third groove slope at a fourth connection point,
an inclination angle at the second connection point between the second groove slope and the first groove slope is equal to or smaller than an inclination angle at the fourth connection point between the third groove slope and the fourth groove slope, and
an inclination angle close to a middle of the diffusion plate is equal to or smaller than an inclination angle close to a periphery of the diffusion plate.

8. The laser projection device of Claim 4,
wherein a shape of each of the groove slopes is aspheric in a section of each of the plurality of grooves in the diffusion plate.

9. The laser projection device of Claim 4,
wherein the plurality of grooves in the diffusion plate are arranged such that a groove pitch is 0.1 mm or more without a clearance.

10. The laser projection device of Claim 4,
wherein a thickness of the diffusion plate is 0.2 mm or more.

11. The laser projection device of Claim 4,
wherein each of shapes of the plurality of grooves in the diffusion plate is an extrusion shape which has a uniform section.

12. The laser projection device of Claim 2,
wherein the plurality of grooves are disposed in each of the incidence surface and the emission surface of the diffusion plate, and a groove direction of the plurality of grooves in the incidence surface and a groove direction of the plurality of grooves in the emission surface are orthogonal to each other.

13. The laser projection device of Claim 12,
The incident surface is larger than or equal to the emission surface in a ratio of a groove depth to a groove pitch for the grooves in the diffusion plate.

14. The laser projection device of Claim 12,
An area formed the groove at the emission surface is larger than or equal to an area formed the groove at the incident surface in the diffusion plate.

15. The laser projection device of Claim 2,
wherein the first total reflection surface of the collimating lens bends an optical path of the incident light substantially at a right angle, and the second total reflection surface bends an optical path of the light from the first total reflection surface substantially at a right angle.

16. The laser projection device of Claim 15,
wherein an emission surface of the collimating lens has a recessed conical shape.
